# EUROPEAN PATENT APPLICATION

(11) **EP 4 835 649 A1**
(43) Date of publication of application: **04.11.2026**
(21) Application number: 25425017.8
(22) Date of filing: 30.04.2025
(51) Int. Cl.: G06F 8/36, G06F 8/65, G06F 16/3329, G06N 3/0475, G06F 40/56, G06F 40/30, G06F 11/3604, G06F 11/3668

(54) **SYSTEM AND METHOD FOR DYNAMIC PROMPT GENERATION AND ADAPTATION ACROSS LARGE LANGUAGE MODELS**

(71) Applicant: Accenture Global Solutions Limited, Dublin 4 (IE)
(72) Inventor: Compieta, Paolo, 63900 Fermo (IT); Vijayaraghavan, Koushik, 560048 Bengaluru, Karnataka (IN); Sabalada Drupadaraja Reddy, Chaitra, 560102 Bangalore, KA (IN); Gurnani, Prakash, 06560 Valbonne (FR); Simoni, Elisabetta, 40050 Bologna (IT); Panuganti, Aparna, 500014 Gangastan, Dulapally, Hyderabad (IN); Vinayagam, Divyaa, 603202 Chennai, Tamil Nadu (IN); Chandra, Ravish, 208021 Kanpur, Uttar Pradesh (IN); Dutta, Sambaran, 562125 Bengaluru, KA (IN); Bansal, Shagun, 122505 Gurugram, Haryana (IN)
(74) Representative: Müller-Boré & Partner Patentanwälte PartG mbB

(57) **Abstract**

A method and system for dynamic prompt generation and adaptation across large language models (LLMs) is disclosed. The method includes receiving, via a graphical user interface (GUI), user input. The user input includes an initial prompt, a target LLM, and an expected output of the target LLM. The method further includes selecting an LLM from a plurality of LLMs and configuration parameters associated with the LLM, based upon the target LLM. Furthermore, based upon the selected LLM and the configuration parameters associated with the selected LLM, two or more target prompts are generated. Thereafter, based upon evaluating the two or more target prompts, an output target prompt is selected from the two or more target prompts. Consequently, the output target prompt is displayed on the GUI.

## Description

### TECHNICAL FIELD

Various examples described herein relate generally to method and system for dynamic prompt generation and adaptation across large language models (LLMs). Specifically, disclosed examples are directed to method and system of dynamic prompt generation and adaptation across LLMs, using Generative Artificial Intelligence (GenAI) and machine learning (ML) techniques.

### BACKGROUND

The proliferation of Generative Artificial Intelligence (GenAI) foundational models has engendered a paradigm shift across diverse industrial sectors. As GenAI adoption scales, application developers encounter complexities in orchestrating heterogeneous Large Language Model (LLM) ensembles to optimize performance metrics, including accuracy, latency, throughput, and specialized code synthesis. The rapid evolution of GenAI, encompassing text generation, image synthesis, and emergent modalities, necessitates adaptive methodologies for user-contextualized interaction.

### SUMMARY

Implementations of the present disclosure are generally directed to dynamic prompt generation and adaptation across large language models (LLMs). More particularly, implementations of the present disclosure are directed to method and system of dynamic prompt generation and adaptation across LLMs, using Generative Artificial Intelligence (GenAI) and machine learning (ML) techniques.

In general, innovative aspects of the subject matter described herein provide a method and a system for dynamic prompt generation and adaptation across multiple LLMs. The method may be implemented by one or more processors of one or more computing devices. The method may include receiving user input via a graphical user interface (GUI). The user input may include an initial prompt, a target large language model (LLM), and an expected output of the target LLM. Further, the method may include dynamically selecting, based upon the expected output of the target LLM, an LLM from a plurality of LLMs and configuration parameters associated with the LLM. Furthermore, the method may include generating, based upon the selected LLM and the configuration parameters associated with the selected LLM, two or more target prompts. Moreover, the method may include selecting, based upon evaluating the two or more target prompts, an output target prompt from the two or more target prompts. Consequently, the method may display the output target prompt on the GUI.

The present disclosure further describes a system for implementing the method provided herein. The present disclosure also describes non-transitory processor-readable storage medium coupled to one or more hardware processors and having instructions stored thereon which, when executed by the one or more hardware processors, cause the one or more hardware processors to perform operations in accordance with the method described herein.

It is appreciated that methods in accordance with the present disclosure can include any combination of the aspects and features described herein. That is, the method in accordance with the present disclosure is not limited to the combinations of aspects and features specifically described herein but also include any combination of the provided aspects and features.

The details of one or more implementations of the present disclosure are set forth in the accompanying drawings and the description below. Other features and advantages of the present disclosure will be apparent from the description and drawings, and from the claims.

### BRIEF DESCRIPTION OF DRAWINGS

Various examples in accordance with the present disclosure will be described with reference to the drawings, in which:
FIG. 1 illustrates an example environment used to execute implementations of the present disclosure.
FIG. 2 illustrates an example architecture of a back-end system for dynamic prompt generation and adaptation across large language models (LLMs), in accordance with implementations of the present disclosure.
FIG. 3 illustrates a block diagram representing generation of the output target prompt from a selected LLM from a plurality of LLMs, in accordance with implementations of the present disclosure.
FIG. 4 illustrates a data flow for dynamic prompt generation and adaptation across large language models (LLMs), by a back-end system, in accordance with implementations of the present disclosure.
FIG. 5 illustrates a flow diagram of an example method for implementation of dynamic prompt generation and adaptation across large language models (LLMs), by the back-end system, in accordance with implementations of the present disclosure.
FIG. 6 illustrates a computer system that may be used to implement the back-end system disclosed in the example environment of FIG. 1. for dynamic prompt generation and adaptation across large language models (LLMs), in accordance with implementations of the present disclosure.

Like reference numbers and designations in the various drawings indicate like elements.

### DETAILED DESCRIPTION

In the following description, various examples are illustrated by way of example and not by way of limitation in the figures of the accompanying drawings. References to various examples in this disclosure are not necessarily to the same example, and such references mean at least one. While specific implementations and other details are discussed, it is to be understood that this is done for illustrative purposes only. A person skilled in the relevant art will recognize that other components and configurations may be used without departing from the scope of the claimed subject matter.

Reference to any "example" (e.g., "for example", "an example of", "by way of example" or the like) are to be considered non-limiting examples regardless of whether expressly stated or not.

The terms used in this specification generally have their ordinary meanings in the art, within the context of the disclosure, and in the specific context where each term is used. Alternative language and synonyms may be used for any one or more of the terms discussed herein, and no special significance should be placed upon whether or not a term is elaborated or discussed herein. Synonyms for certain terms are provided. A recital of one or more synonyms does not exclude the use of other synonyms. The use of examples anywhere in this specification including examples of any terms discussed herein is illustrative only and is not intended to further limit the scope and meaning of the disclosure or of any exemplified term. Likewise, the disclosure is not limited to various examples given in this specification.

Without intent to limit the scope of the disclosure, examples of instruments, apparatus, methods, and their related results according to the examples of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions will control.

The term "comprising" when utilized means "including, but not necessarily limited to"; it specifically indicates open-ended inclusion or membership in the so-described combination, group, series and the like.

The term "a" means "one or more" unless the context clearly indicates a single element.

"First," "second," etc., are labels to distinguish components or blocks of otherwise similar names but does not imply any sequence or numerical limitation.

"And/or" for two possibilities means either or both of the stated possibilities ("A and/or B" covers A alone, B alone, or both A and B take together), and when present with three or more stated possibilities means any individual possibility alone, all possibilities taken together, or some combination of possibilities that is less than all of the possibilities. The language in the format "at least one of A ... and N" where A through N are possibilities means "and/or" for the stated possibilities (e.g., at least one A, at least one N, at least one A and at least one N, etc.).

It should also be noted that in some alternative implementations, the functions/acts noted may occur out of the order noted in the figures. For example, two steps disclosed or shown in succession may in fact be executed substantially concurrently or may sometimes be executed in the reverse order, depending upon the functionality/acts involved.

Specific details are provided in the following description to provide a thorough understanding of examples. However, it will be understood by one of ordinary skill in the art that examples may be practiced without these specific details. For example, systems may be shown in block diagrams so as not to obscure the examples in unnecessary detail. In other instances, well-known processes, structures, and techniques may be shown without unnecessary detail in order to avoid obscuring details of the examples.

The specification and drawings are to be regarded in an illustrative rather than a restrictive sense. It will, however, be evident that various modifications and changes may be made thereunto without departing from the broader spirit and scope of the invention as set forth in the claims.

GenAI has profoundly impacted various industries, necessitating the use of multiple LLMs to achieve specific objectives such as higher accuracy, lower latency, and specialized code generation. The dynamic prompt generation and adaptation across large language models (LLMs) addresses this requirement by implementing real-time prompt modification based on user input and system feedback, thereby enhancing user experience through personalized and intuitive interactions.

Specifically, dynamic prompt generation and adaptation across multiple LLMs entails the automated generation and iterative refinement of prompts tailored to specific task requirements and contextual parameters, improving performance and efficiency by adapting to different LLM strengths and weaknesses.

The traditional method of dynamic prompt generation and adaptation across LLMs faces several technical challenges. For example, the traditional methods lack model-agnostic prompt generation. Specifically, different large language models (LLMs) have varying abilities to understand and respond to prompts. Prompt structures that work well in one LLM may not work in another due to differences in architecture, token limits, context windows or the amount of text measured in tokens, and training data. In the traditional methods, prompt testing and optimization are specific to the LLM being used, and there is no standardized way to ensure that the same result can be obtained across different LLMs. Moreover, the traditional methods generate prompts solely based on the user's query or input, often ignoring the expected output or detailed instructions.

Furthermore, traditional methods face the challenge of consistency due to trial-and-error, where users manually adjust prompts to work with different LLM, and consistency across LLM is not guaranteed. The manual prompt creation can be highly time-consuming and prone to suboptimal results, especially when scaling across various use cases.

Moreover, in the traditional methods lacks ensuring that different LLMs (such as GPT-3.5, GPT-4o, or other custom models) produce the same quality of output when given a prompt, especially if the underlying LLMs are vastly different in architecture. The traditional methods further include cross-LLM prompting complexity. In the traditional methods, generating prompts that work across different LLMs typically requires expert knowledge in LLM architectures, tokenization, and prompt engineering, which is a barrier for many users.

Further, in the traditional methods includes the challenge of Scalability for Future LLMs. As more LLMs emerge, keeping up with their nuances in prompt design becomes more challenging in the traditional methods. Additionally, the traditional methods lack dynamic adjustments based on target model constraints.

Furthermore, in traditional methods, GenAI applications rely on a single LLM to deliver their capabilities. However, given the growing complexity of tasks and the necessity to meet precise application-specific objectives, switching between LLMs during runtime has become crucial. This dynamic switching, based on unique requirements, promises enhanced outcomes by optimizing performance across different dimensions. Despite its potential, runtime switching of LLMs introduces significant challenges. Prompts crafted for one LLM often fail to produce consistent results when applied to another LLM, disrupting workflow continuity, and undermining the utility of LLM switching. Consequently, AI developers and prompt engineers invest substantial effort in manually writing and tuning prompts, as well as evaluating and testing extensively, which negates the benefits of dynamic LLM switching.

Implementations of the present disclosure discloses a solution, including a system and a method of dynamic prompt generation and adaptation across LLMs, using GenAI and ML techniques to overcome above mentioned technical challenges of the traditional methods. For example, to address the challenge of model-agnostic prompt generation, in the present disclosure, a LLM is selected to generate prompts, and the generated prompts are dynamically adapted for any target LLM, while ensuring consistency in output. The present disclosure includes prompt generation across models, which has not been explicitly solved in a scalable and structured manner in traditional methods. Specifically, the selected LLM serves as a cross-model validation layer, which possess capability to generate the prompt for a target model that guarantees similar outputs across multiple LLMs. Therefore, the present disclosure facilitates interoperability between models and cross-model consistency. Moreover, the present disclosure utilizes a combination of the user's query, instructions, expected response, and the target LLM to generate a tailored prompt. The combination facilitates generation of prompts which aligns with the user's expectations and are adapted across different LLMs. Moreover, said combination effectively transforms how prompts are optimized, ensuring the prompts meet predefined criteria, regardless of the target LLM's internal workings.

Furthermore, to address the challenge of consistency, in the present disclosure, an automated prompt refinement mechanism is disclosed which significantly reduces manual intervention and enhances precision. In other words, the present disclosure, continuously adjusts the prompt until the desired output is produced in the target LLM, which introduces a systematic way of ensuring identical outputs across diverse LLMs. The present disclosure systematically generates prompts that unlock significant performance improvements in LLM workloads. Additionally, in the present disclosure, output consistency across LLMs is defined, thereby ensuring that users can move between LLMs without needing to re-engineer their prompts or face unpredictable differences in output. This capability can be vital for organizations that require seamless transitions between LLMs without losing the accuracy or quality of responses, making it highly practical in real-world applications. To address the challenge of cross-LLM prompting complexity, the present disclosure abstracts the complexities of dynamic prompt generation and adaptation across LLMs from the end user by leveraging LLM's ability to dynamically create prompts. The present method and system let non-expert users achieve optimal prompt results across multiple LLMs without needing to understand the underlying intricacies.

Further, to address the challenge of scalability for future LLMs, the method and system disclosed in the present disclosure is inherently scalable, meaning it can work with future LLMs as they become available. The selected LLM serving as the central standard for prompt generation means the present disclosure can continually adapt as new LLMs are introduced, without requiring re-engineering of prompts for each new LLM. Additionally, to address the challenge of dynamic adjustments based on target LLM constraints, the present disclosure intelligently adjusts the prompt based on the specific constraints of the target LLM. The dynamic adjustment enables the generated prompts that work in one LLM (e.g., GPT-4, which has a larger context window) will also work in other LLMs (e.g., GPT-3.5 with a smaller token limit). The present method and system have capability to account for and optimize prompts based on LLM-specific constraints.

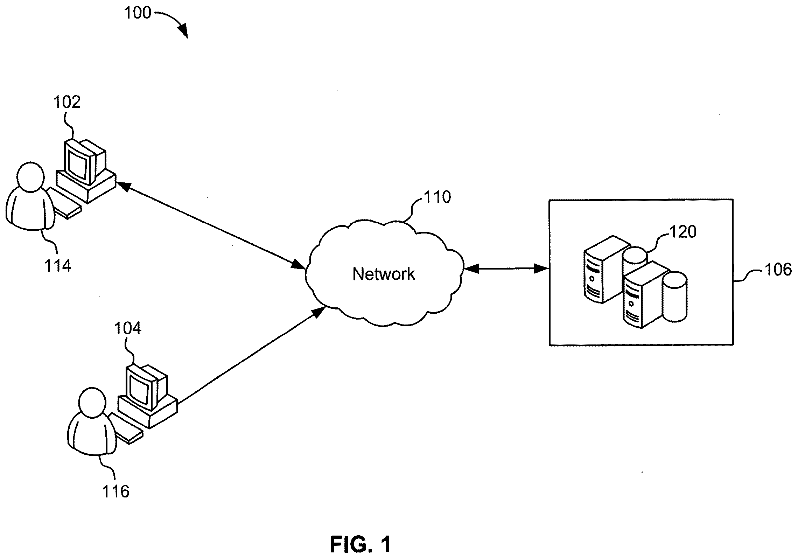

FIG. 1 depicts an example environment 100 that can be used to execute implementations of the present disclosure. In some examples, the example environment 100 enables users associated with respective systems to execute requests to generate content by invoking a trained language model in accordance with implementations of the present disclosure. The example environment 100 includes computing devices 102 and 104, back-end system 106, and a network 110. In some examples, the computing devices 102 and 104 are used by respective users 114 and 116 to log into and interact with applications executing on the back-end system 106 according to implementations of the present disclosure.

As shown in FIG. 1, the computing devices 102 and 104 are depicted as desktop computing devices. It is contemplated, however, that implementations of the present disclosure can be realized with any appropriate type of computing device (e.g., smartphone, tablet, laptop computer, voice-enabled devices). In some examples, the network 110 includes a local area network (LAN), wide area network (WAN), the Internet, or a combination thereof, and connects web sites (e.g., web applications executing on the back-end system 106), user devices (e.g., the computing devices 102, 104), and the back-end system 106. In some examples, the network 110 can be accessed over a wired and/or a wireless communications link. For example, mobile computing devices, such as smartphones can utilize a cellular network to access the network 110.

While only one back-end system 106 is shown in FIG. 1, there may be more than one back-end system 106, and each of the back-end systems 106 includes at least one server system 120. In some examples, the server system 120 hosts one or more computer implemented services that users 114 and/or 116 can interact with by using the computing devices 102 and/or 104, respectively. For example, components of enterprise systems and applications can be hosted on one or more of the back-end system 106. In some examples, the back-end system 106 can be provided as an on-premises system that is operated by an enterprise or a third-party taking part in cross-platform interactions and data management. In some examples, the back-end system 106 can be provided as an off-premises system (e.g., cloud or on-demand) that is operated by an enterprise or a third-party on behalf of an enterprise.

In some examples, the computing devices 102 and 104 each include computer executable applications executed thereon. In some examples, the computing devices 102 and 104 each include a web browser application executed thereon, which can be used to display one or more web pages of applications executing on the back-end system 106. In some examples, each of the computing devices 102 and 104 can display one or more GUIs that enable the respective users 114 and 116 to interact with the back-end system 106. In accordance with implementations of the present disclosure, the back-end system 106 may host enterprise applications or systems that require data sharing and data privacy. In some examples, the computing device 102 and/or the computing device 104 can communicate with the back-end system 106 over the network 110.

In some implementations, the back-end system 106 can be implemented in a cloud environment. The back-end system 106 includes at least one server system (or server) 120. In the example of FIG. 1, the back-end system 106 can include various forms of servers including, but not limited to, a web server, an application server, a proxy server, a network server, and/or a server pool. In general, server systems accept requests for application services and provide such services to any number of client devices (for example, the computing device 102 over the network 110).

In some implementations, the back-end system 106 can be used for dynamic prompt generation and adaptation across LLMs. Various examples, depicting dynamic prompt generation and adaptation across LLMs, are described in detail in conjunctions with figures below.

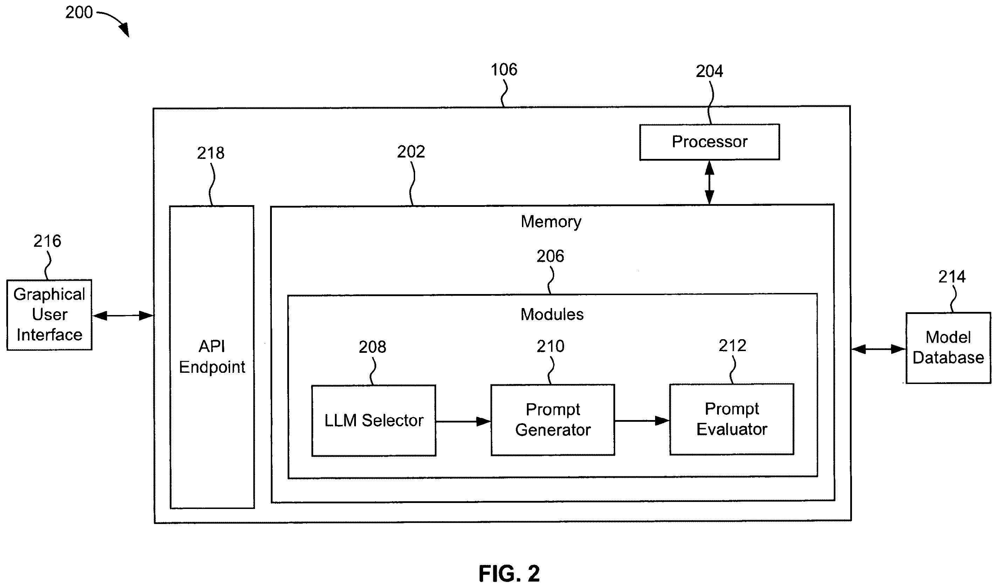

FIG. 2 illustrates an example architecture 200 of the back-end system 106 for dynamic prompt generation and adaptation across LLMs, in accordance with implementations of the present disclosure. The back-end system 106 may include one or more non-transitory processor-readable medium (herein referenced as memory) 202 storing instructions to be executed by the one or more hardware processors 204. In the back-end system 106, the one or more hardware processors 204 may be communicably coupled with the one or more memory 202 and configured to execute the machine executable instructions. In some examples, the one or more hardware processors 204 may include, but not limited to, microprocessors, microcomputers, hardware processors, microcontrollers, digital signal processors, central processing units, state machines, logic circuits, Application Specific Integrated Circuits (ASICs), Field Programmable Gate Arrays (FPGAs), and/or any devices that manipulate data or signals based on operational instructions. Among other capabilities, the one or more hardware processors 204 may be programmed to cooperate with non-transitory processor-readable instructions stored in one or more memory 202 for performing operations according to the present disclosure. The one or more memory 202 may be non-transitory or non-volatile medium, such as a magnetic disk or solid-state non-volatile memory or volatile medium such as Random Access Memory (RAM), and/or the like.

In some examples, the one or more memory 202 may include modules 206 in the form of programmable instructions executable by the one or more hardware processors 204. The modules 206 may further include a LLM selector 208, a prompt generator 210, and a prompt evaluator 212. Further, the back-end system 106 may be communicatively coupled to a model database 214. The model database 214 may include one or more LLMs (also be referenced to as GenAI models, foundation models, natural language processing (NLP) models and/or the like). In an implementation, the LLMs may include pre-trained LLMs or generated LLMs. The pre-trained LLMs may be general-purpose GAI models like large deep learning neural networks, which may be trained using a broad range of generalized and unlabelled training data to perform one or more tasks, such as, human computer interactions (e.g., question and answering), automating process execution, process planning, generating step-by-step procedures for the process execution, performing data analysis, and/or the like. While implementations of the present disclosure are described in further detail herein with non-limiting reference to the LLMs, it is contemplated that implementations of the present disclosure may be realized using any appropriate foundation models or Machine Learning (ML) models, or Artificial Intelligence (AI) models.

In an aspect, the back-end system 106 may receive a user input via a graphical user interface (GUI) 216. The user input may include an initial prompt, a target large language model (LLM), and an expected output of the target LLM. The GUI 216 may be developed by using technology such as angular. The angular may include tools and features to create dynamic and responsive GUI 216, handling user input and displaying data effectively. The angular may include collection of integrated libraries covering a wide variety of features such as routing, forms management, client-server communication, or the like. In other words, GUI 216 may be created using the angular's component-based architecture, facilitating modularity and maintainability. Herein, the angular may further include components, implemented for prompt input, output display, and target LLM selection. Specifically, the GUI 216 may be segmented into distinct components, each responsible for a specific function (e.g., prompt input component, output display component, LLM selector component). The angular's routing architecture may be used to manage navigation between different views or sections of the application. The routes may be defined to map uniform resource locator (URL) to specific components. Further, decorators (for example, @Input() and @Output()) may facilitate data sharing and event emission between components. Services (using angular's dependency injection) may be used for communication between unrelated components. Further, state management libraries like NgRx, or Akita may be implemented for complex application state. The GUI 216 may include interceptors (for example, http interceptors) to be implemented for adding global logic to every http request, such as adding authentication tokens.

The GUI 216 may transmit the user input to the back-end system 106 for further processing. Specifically, interceptor (for example, an http interceptor) may be used to send HTTP requests to the back-end system's 106 application programming interface (API). In an example, the user input including, initial prompt, target LLM, and the expected output of the target LLM may be encapsulated into a JavaScript Object Notation (JSON) object. Thereafter, an HTTP POST request may be sent to a designated API endpoint 218 in the back-end system 106. The HTTP POST request may include request line, headers and body. The request line may specify the HTTP method (POST), the target URL (API endpoint 218), and the HTTP version. The header may include metadata related to the HTTP POST request, such as content type, authorization tokens, and user-agent information. The body may include the data being sent to the server (back-end system 106), typically in a structured format like JSON. In an example, said designated API endpoint 218 may be a RESTful API endpoint, defined in the back-end system 106 to receive the user input. The RESTful API endpoint may accept HTTP POST requests with a JSON payload. Herein, the JSON payloads may be structured using objects (key-value pairs enclosed in curly braces {}) and arrays (ordered lists of values enclosed in square brackets []) The back-end system 106 may deserialize the received JSON payload into structured data objects. The deserialization may include parsing the JSON data and mapping it to corresponding data structures (e.g., objects or classes).

The user input may be a composite data structure including, but not limited to, the initial prompt, the target LLM, and the expected output of the target LLM. The initial prompt may refer to a natural language query or instruction formulated by the user (114 and/or 116). The user input may provide the primary input to the target LLM, initiating the generation of a response. The prompt's structure and complexity may vary significantly depending on the intended task and the user's expertise. The initial prompt may refer to the instruction provided by the user to the LLM, defining the task or query for the LLM to process. Specifically, the initial prompt may be a string based and provided as input to the back-end system 106 API. For example, "Summarize the key findings of this research paper: [paper text]." Or "Write a python function that reverses a string."

In an aspect, the natural language query may be submitted by users 114 and/or 116 via the GUI 216. The natural language query may refer to user's 114 and/or 116 request for information. It may be appreciated that human users 114 and/or 116 are shown for illustration purposes only and that 'users' generating natural language queries in accordance with the disclosed examples can also include applications being executed on the computing devices 102 and/or 104 that automatically generate the natural language query without intervention from the human users 114 and/or 116. The natural language query may be a string of text formulated by the user 114 and/or 116 to express the required information. For instance, the natural language query may range from simple keyword searches phrased in a conversational manner (e.g., "What is the capital of France?") to complex, multi-clause questions requiring nuanced understanding of context and semantics (e.g., "What are the long-term effects of this medication, considering the patient's history of heart disease?"). In addition to text initiated by the users 114 and/or 116, the natural language query may be implicitly generated from system events or derived from diverse data sources, encompassing textual input, uploaded files, documents, and multimedia content.

Further, the target LLM may refer to specific LLM to be utilized for processing the initial prompt. The model database 214 may include a portfolio of LLMs, each possessing distinct architectural characteristics, parameterizations, and training datasets, resulting in variations in performance and output characteristics. Specifically, the target LLM may include an identifier, for example, a numerical identifier, a string identifier, an alphanumeric identifier, utilized by the back-end system 106 to select the appropriate LLM API or model endpoint. The non-limiting examples of target LLM may include GPT-4, Llama 2, Claude, or the like.

Furthermore, the expected output of the target LLM may be based on a pre-defined criterion or a set of pre-defined criteria against which the LLM's generated output will be evaluated. The pre-defined criteria may include, but not limited to, an output format, content constraints and performance metrics. The output format may define the desired structural organization of the LLM's response (for example, JSON, XML, plain text, or the like). The content constraints may define semantic or syntactic requirements for the generated content (for example, keyword inclusion, factual accuracy, sentiment polarity, or the like). The performance metrics may define quantitative targets for metrics such as latency, throughput, and/or perplexity. Specifically, the expected output of the target LLM may be a string which may be compared to the LLM's generated string. For example, if the initial prompt is to translate "Hello world" to French, the expected output would be "Bonjour le monde", or if the initial prompt is to summarize a document, the expected output may be a written summary of the document.

Moreover, the user input may be received by the LLM selector 208. The LLM selector 208 may dynamically select an LLM from a plurality of LLMs and configuration parameters associated with the LLM, based upon the target LLM. The plurality of LLMs may be stored in the model database 214. In an example, the model database 214 may be a structured query language (SQL) database which may store metadata about available LLMs. The non-limiting examples of the metadata may include model identification (ID), model name (for example, GPT-4, GPT-4o, Llama 2), capabilities, configuration parameters and compatibility matrix. The model ID may refer to unique identifier for each LLM of the plurality of LLMs. The capabilities may include bitmask or JSON object representing the LLM's features (e.g., reasoning, code generation, text summarization). The configuration parameters may include JSON blob containing specific settings for the LLM. The compatibility matrix may include a table or JSON structure indicating which LLMs are compatible with others for prompt standardization. Additionally, the configuration parameters may control the behavior and output characteristics of the selected LLM, thereby fine-tuning the selected LLM's responses to meet specific requirements. The non-limiting examples of the configuration parameters associated with the LLM may include temperature (controls the randomness of the LLM's output), top-p (nucleus sampling parameter), maximum tokens (maximum number of units of the generated output), frequency penalty (penalizes repeated tokens), model version (specific version of the LLM), context window size (the number of tokens the LLM can consider in its context), instruction tuning (specific instructions used to fine tune the LLM) and parameter count (number of parameters the LLM includes).

Further, the LLM selector 208 may identify and fetch one or more rules for selecting the LLM based upon a model family associated with the target LLM. Each LLM of the plurality of LLMs in the model database 214 may be associated with the model family, and each model family may be assigned a specific LLM for respective task. Further, the one or more rules may include SQL queries or stored procedures defining the selection logic for selecting the LLM. After receiving the user input, the LLM selector 208 may query the model database 214 to select the LLM. The selection of the LLM may be implemented by using one or more rules stored in the model database 214. The one or more rules may be implemented using SQL queries. For instance, below expressed SQL query may be executed by the LLM selector 208 and retrieves the model ID of the selected LLM:
SELECT model_id FROM models WHERE model_name = 'GPT-4' AND capabilities LIKE '%reasoning%'

In an example, if the target LLM is GPT-4o, the selected LLM may be GPT-4 (due to superior reasoning abilities). If no predefined LLM exists, the LLM selector 208 may utilize meta-learning techniques to select the LLM. The meta-learning techniques may include meta-data tagging. Specifically, the LLM selector 208 may utilize metadata tagging to ensure that each selected LLM may align with the target LLM. The selection ensures that all generated prompts maintain high consistency across different LLMs. Thereafter, the selected LLM may standardize a prompt by converting the initial prompt to a target prompt.

Further, the LLM selector 208 may transmit the selected LLM, and the configuration parameters associated with the LLM to the prompt generator 210. The prompt generator 210 may generate, based upon the selected LLM and the configuration parameters associated with the selected LLM, two or more target prompts. Further, the LLM selector 208 may transmit the selected LLM identifier, and the configuration parameters associated with the LLM to the prompt generator 210. The LLM identifier may refer to a string or object which may uniquely identify the selected LLM (for example, "GPT-4," "Llama-2-70b," a URL for an API endpoint). The transmission may be implemented through function calls, inter-process communication (IPC), and/or network communication (e.g., API calls)

In further detail, the two or more target prompts may be generated based upon a plurality of prompts stored in a database (not shown in FIG. 2) for selection. The prompt generator 210 may select a meta prompt. Based on the meta prompt, the prompt generator 210 may generate the two or more target prompts. The meta prompt may refer to higher-level prompt which may acts as a template or instruction for generating multiple target prompts. The meta prompt may define the structure, variations, or constraints for the target prompts. Specifically, the meta prompt may guide the LLM through the problem-solving process. The meta prompt may delineate the procedural steps or reasoning pathways, effectively providing the LLM with task-specific information. By emphasizing the reasoning of problem-solving, that is the underlying methodology or algorithm, meta prompts enable the LLM to dynamically adapt and apply a consistent reasoning approach across diverse instantiations of the same task category. In essence, the meta prompt may elicit strong instruction-following capabilities in LLMs solely through in-context learning.

Moreover, each target prompt of the two or more target prompts may include a unique variation based at least in part upon the meta prompt and based at least in part upon the initial prompt. The unique variation may correspond to the user input, thereby facilitating generation of optimal responses from the selected LLM. The prompt generation from the prompt generator 210 may include prompt engineering techniques such as adding context, examples, or constraints to improve LLM performance. Additionally, the prompt generation may include template-based generation such as using pre-defined prompt templates adapted to the specific LLM and task. Further, the prompt generation may include parameter-aware generation, that is, adjusting prompt structure or content based on the LLM's configuration parameters (e.g., adjusting the prompt length based on maximum tokens). The prompt generator 210 may utilize techniques such as string manipulation, regular expressions, or natural language processing (NLP) libraries to create two or more target prompts. The prompt generator 210 may further utilize a database or external knowledge source to retrieve relevant information for prompt augmentation.

For example, the user input may be "Summarize this article", the prompt generator 210 may generate the two or more target prompts as below:
Target prompt 1: "Provide a concise summary of the following article: [article text]."
Target prompt 2: "Extract the key points and main arguments from this article: [article text]."

In an aspect, the prompt generator 210 may utilize the selected meta-prompt to create the two or more target prompts. Specifically, the prompt generator 210 may substitute placeholders or variables in the meta-prompt with specific data (e.g., the user's input text). Moreover, the prompt generator 210 may applying transformations or modifications to the prompt based on the meta-prompt's instructions. Thereafter, the prompt generator 210 may cause the selected LLM to generate the two or more target prompts, via the meta prompt.

Furthermore, the prompt generator 210 may transmit the two or more target prompts to the prompt evaluator 212. The prompt evaluator 212 may evaluate the two or more target prompts and then select the output target prompt. Specifically, the prompt evaluator 212 may apply one or more configuration parameters associated with the LLM, tuned for generating each of the two or more target prompts (by the prompt generator 210). Further, the prompt evaluator 212 may compare each of the two or more target prompts with the expected output of the target LLM for selecting the output target prompt. The prompt evaluator 212 may apply the one or more retuned configuration parameters associated with the LLM until each of the two or more target prompts matches with the expected output of the target LLM by a predetermined threshold value.

In further detail, the prompt evaluator 212 may compare the generated two or more target prompts with the expected output of the target LLM. The prompt evaluator 212 may systematically modify configuration parameters associated with the LLM (for example, temperature adjustment, top-k and/or top-p) and retrieves the corresponding LLM outputs. The prompt evaluator 212 may further, compares the LLM's generated output with the expected output. The process continues until the similarity between the generated and expected outputs reaches a predefined threshold value, indicating sufficient accuracy. For instance, temperature adjustment may include modifying the temperature parameter to control the randomness and creativity of the selected LLM's responses. By varying temperature, the prompt evaluator 212 may assesses the prompt's stability across different levels of output diversity. In another instance, top-k and top-p sampling may include adjusting the top-k and top-p values to influence the selection of tokens during generation of two or more target prompts. Thus, the prompt evaluator 212 may evaluate the prompt's sensitivity to different sampling strategies, ensuring that the desired output is not overly dependent on specific sampling conditions. The configuration parameters associated with the LLM may be implemented by sending multiple API calls to the plurality of LLMs in the model database 214, each with a different set of parameter values. For each set of configuration parameters, the prompt evaluator 212 may receive the LLM's generated output. The prompt evaluator 212 may then compares said output against the expected output of the target LLM using a defined metric (e.g., string similarity, semantic similarity, or task-specific evaluation criteria). The comparison may be done using techniques such as cosine similarity of word embeddings, or bilingual evaluation understudy (BLEU) scores. Moreover, the prompt evaluator 212 may determine whether the generated output matches the expected output within the predefined threshold value. The predefined threshold may represent the acceptable level of deviation or error. If the output falls within the predefined threshold, the prompt may be considered validated for corresponding parameter set. If the output does not meet the threshold, the prompt evaluator 212 may further adjust the LLM parameters or refine the prompt itself. The iterative loop may continue until the prompt consistently produces acceptable outputs across a range of LLM parameter value.

In another aspect, the prompt evaluator 212 may implement semantic evaluation technique to evaluate the generated two or more target prompts, specifically by leveraging embedding distance calculations. The semantic evaluation technique may determine the semantic similarity between the LLM's output and the expected output. The prompt evaluator 212 may utilize pre-trained embedding models, such as provided by OpenAI or sentence-bidirectional encoder representations from transformers (BERT), to transform both the LLM's generated output and the expected response into vector representations. The embedding models map text into a high-dimensional vector space, where semantically similar texts may be located closer to each other. Specifically, the prompt evaluator 212 may pass the text strings through the embedding model's API or local inference pipeline, resulting in numerical vector outputs. Furthermore, the prompt evaluator 212 may calculate the cosine similarity between the embedding vectors of the LLM's output and the expected response. Herein, cosine similarity may be a measure of the cosine of the angle between two vectors, ranging from -1 (completely dissimilar) to 1 (identical). The calculated cosine similarity score may represent the semantic similarity between the two texts. A higher cosine similarity score indicates a greater degree of semantic similarity. The prompt evaluator 212 may then compare said cosine similarity score against a pre-defined threshold. If the cosine similarity score exceeds the threshold, the LLM's output may be considered semantically similar to the expected response, and the prompt is deemed validated. If the cosine similarity score falls below the threshold, the LLM's output may be considered semantically dissimilar, and the prompt may require further refinement.

Moreover, if the evaluation metric falls below the threshold, the prompt evaluator 212 may trigger a failure signal. Upon generation of the failure signal, prompt evaluator 212 may modify the two or more target prompts. The modification may include altering the prompt to elicit a more accurate response from the LLM. For example, the modification may include restructuring the prompt's syntax, adding or removing context, adjusting the level of detail, adding constraints to the output, or the like. Additionally, the prompt evaluator 212 may implement techniques such as zero-shot and few-shot learning to modify the two or more target prompts. In zero-shot learning, the prompt evaluator 212 may cause the LLM to add instructions or constraints to the two or more target prompts without providing any explicit examples. For example, if a summarization fails, the back-end system 106 may add "Summarize the text in three sentences". In few-shot learning the prompt evaluator 212 may include providing the LLM with a small number of example input-output pairs within the prompt itself, thereby enabling the LLM to learn the desired output format or style from the examples. For example, providing a few examples of text and the desired summaries within the prompt. Furthermore, the prompt evaluator 212 may iterates through the two or more target prompts' modification and retrial process until the LLM's output meets the predefined threshold or a maximum number of retries is reached. The iterative loop may progressively refine the two or more target prompts and adapt to the specific characteristics of the target LLM. The iterative loop may also modify the LLM configuration parameters, as well as the two or more target prompts.

Further, based upon evaluating the two or more target prompts, the prompt evaluator 212 may select an output target prompt from the two or more target prompts. The prompt evaluator 212 may further display the output target prompt on the GUI 216. Specifically, the prompt evaluator 212 may utilize machine learning techniques for selecting the output target prompt. The machine learning techniques may utilize the evaluation metrics (for example, cosine similarity, string similarity, task-specific metrics or the like) obtained during the evaluation process. Furthermore, the selection may include ranking the two or more target prompts based on the evaluation scores, selecting the prompt with the highest score, followed by applying a weighted scoring system that considers multiple evaluation metrics. Once the optimal output target prompt is selected, the prompt evaluator 212 may transmits the prompt to the GUI 216. To transmit the output target prompt, the prompt evaluator 212 may serialize the output target prompt string into a format suitable for transmission (e.g., JSON). After that, the prompt evaluator 212 may send the serialized data to the GUI 216 via an API endpoint 218. The GUI 216 may then render the prompt string in a user-friendly format, such as a text box or display area. Additionally, prior to displaying or returning the prompt, the prompt evaluator 212 may perform additional formatting. The formatting may include cleaning up the prompt string (e.g., removing unnecessary whitespace, correcting syntax). The formatting may further include highlighting key elements or parameters within the prompt. Moreover, the formatting may include structuring the prompt into a specific format expected by the target LLM or the user.

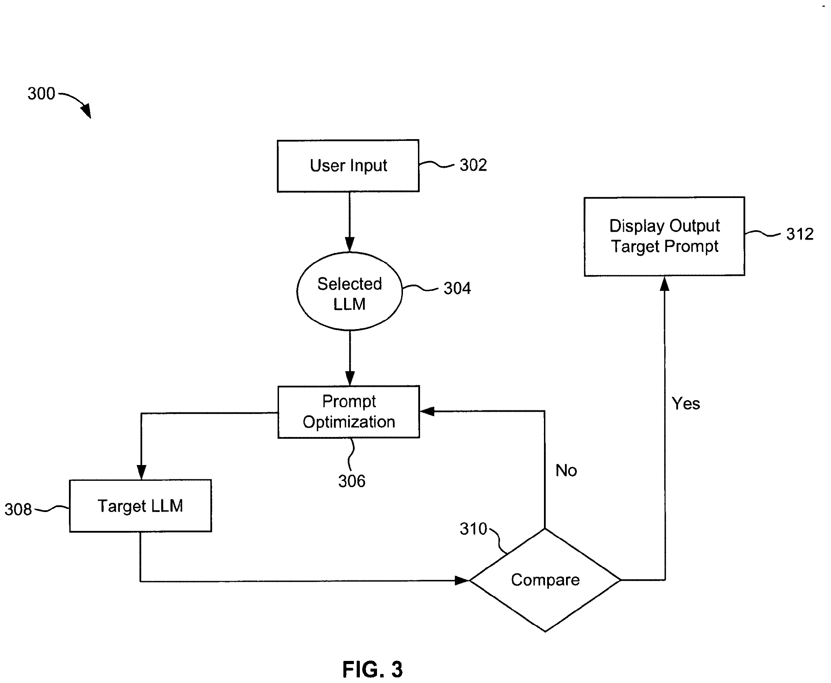

FIG. 3 illustrates a block diagram 300 representing generation of the output target prompt from the selected LLM from the plurality of LLMs. The selected LLM 304 may receive the user input 302 (via the GUI 216). The user input 302 may include the initial prompt, the target large language model (LLM), and the expected output of the target LLM. The selected LLM, upon receiving the user input 302, may perform prompt optimization 306. Herein, the prompt optimization may include standardizing the prompt by converting the initial prompt to the target prompt. Furthermore, the prompt optimization 306 may include generation of two or more target prompts, followed by the evaluation of the generated two or more target prompts (by the prompt evaluator 212). Based on the evaluation, the output target prompt from the two or more target prompts may be selected. The output target prompt may be transmitted to the target LLM 308. The target LLM 308 may generate response corresponding to the user input 302. Moreover, the target LLM 308 may compare 310 the said generated response with the expected output of the target LLM. The comparison may include calculating a similarity metric (e.g., cosine similarity, BLEU score) between the target LLM's 308 output and the expected output of the target LLM. Thereafter, the back-end system 106 may determine on whether to perform iterative optimization based on the comparison result. If the target LLM's output sufficiently matches the expected output of the target LLM (according to a predefined threshold), the process proceeds to the final step. If the target LLM's output does not match, the back-end system 106 may returns to the prompt optimization 306. In the iterative optimization, the prompt may be further refined based on the comparison results. In other words, the back-end system 106 may adjust prompt parameters or modify the prompt structure. The refined prompt may be transmitted to the target LLM 308 again for another iteration. The iterative optimization may continue until the target LLM's output matches the expected output of the target LLM or a maximum number of iterations is reached. Once the target LLM's output matches the expected output of the target LLM, the back-end system 106 may display 312 the output target prompt on the GUI 216.

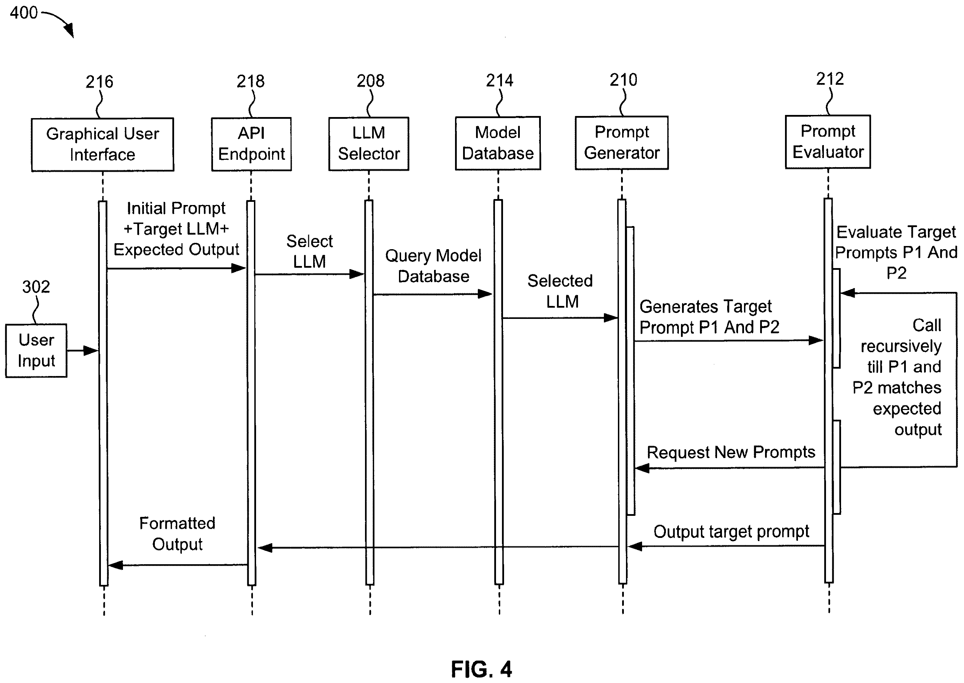

FIG. 4 illustrates an example data flow 400 for dynamic prompt generation and adaptation across LLMs by the back-end system 106, in accordance with implementations of the present disclosure. The FIG. 4 has been described in conjunction with FIG. 2 and FIG. 3. The data flow may be initiated with user 114 and/or 116 providing the user input 302, via GUI 216. The user input 302 may include the initial prompt, the target large language model (LLM), and the expected output of the target LLM. The user input 302 may be transmitted to API endpoint 218. The API endpoint 218 may serve as a gateway, receiving the user input 302 and forwarding it to the backend system 106 for further processing. The API endpoint 218 then may interact with the LLM selector 208. The LLM selector 208 may dynamically select the LLM, based upon the target LLM, an LLM from the plurality of LLMs and configuration parameters associated with the LLM. Specifically, the LLM selector 208 may query the model database 214 to select the LLM. Furthermore, the prompt generator 210, based upon the selected LLM and the configuration parameters associated with the selected LLM, may generate, two or more target prompts. For instance, the prompt generator 210 may generate prompt 1 and prompt 2. The two or more target prompts (prompt 1 and prompt 2) may be evaluated by the prompt evaluator 212. The prompt evaluator 212 may compare each of the two or more target prompts with the expected output of the target LLM. Based on the comparison, the prompt evaluator 212 may select the output target prompt. The prompt evaluator 212 may call recursively until the two or more generated prompt matches the expected output of the target LLM, indicating the iterative refinement process. In case the two or more target prompts (prompt 1 and prompt 2) do not matches the expected output, the prompt evaluator 212 may request the prompt generator 210 to generate new prompts. Consequently, the selected output target prompt may be formatted for user 114 and/or 116 presentation and return to the GUI 216 via the API endpoint 218.

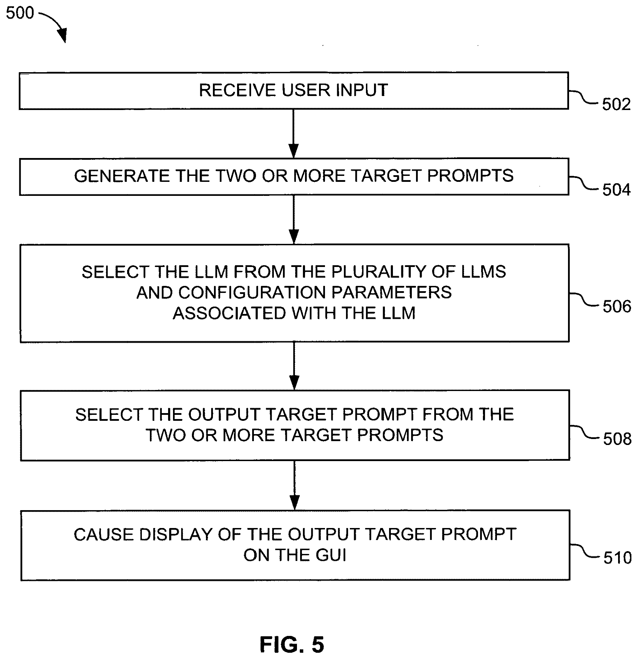

FIG. 5 illustrates a flow diagram of an example computer-implemented method 500 for implementing dynamic prompt generation and adaptation across LLMs, by the back-end system 106, in accordance with implementations of the present disclosure. In some examples, the computer-implemented method 500 may be executed using the one or more processors 204 disclosed in related to FIGS. 1-4.

The computer-implemented method 500 may include receiving 502 user input, via the graphical user interface (GUI) 216. Herein, the user input may include the initial prompt, the target large language model (LLM), and the expected output of the target LLM.

The computer-implemented method 500 may include selecting 504 the LLM from a plurality of LLMs and configuration parameters associated with the LLM, based upon the target LLM. Herein, selecting the LLM and the configuration parameters may include identifying and fetching one or more rules for selecting the LLM, based upon the model family associated with the target LLM. The LLM may be selected based upon the identified and fetched one or more rules. The selected LLM may standardize the prompt by converting the initial prompt to the target prompt.

The computer-implemented method 500 may include generating 506 two or more target prompts, based upon the selected LLM and the configuration parameters associated with the selected LLM. The two or more target prompts may be generated based upon the plurality of prompts stored in the database for selection.

The computer-implemented method 500 may include selecting 508 the output target prompt from the two or more target prompts, based upon evaluating the two or more target prompts. Evaluating the two or more target prompts may further include applying, one or more LLM parameters tuned for generating each of the two or more target prompts. Thereafter, each of the two or more target prompts may be compared with the expected output of the target LLM for selecting the output target prompt. Specifically, one or more retuned LLM parameters may applied until each of the two or more target prompts matches with the expected output of the target LLM by the predetermined threshold value

The computer-implemented method 500 may include causing 510 display of the output target prompt on the GUI 216.

Implementations of the present disclosure provide technical advancements in the context of dynamic prompt generation and adaptation across LLMs. For example, in the present disclosure, the input received from the user, may be a composite data structure including the initial prompt, the target large language model (LLM), and an expected output of the target LLM. The reception of composite data structure by the back-end system 106 may trigger a sequence of processing operations, including prompt preprocessing, LLM invocation, output postprocessing, and evaluation against the specified expected output. Thus, the back-end system 106 may dynamically adapt and optimize prompts to achieve the user's desired output characteristics across diverse LLM architectures.

Moreover, the prompt generator 210 may ensure that the prompts sent to the LLM are tailored to its specific capabilities and configuration, maximizing the quality and consistency of the generated output. The prompt generator 210 may utilize meta-prompts to generate optimized target prompts for specific LLMs, enhancing the quality and consistency of LLM outputs. By employing this rigorous evaluation process, the prompt evaluator 212 may ensures the reliability and consistency of the generated prompts, ultimately enhancing the performance and accuracy of the LLM. For instance, semantic evaluation via embedding models, the prompt evaluator 212 may assess the quality of LLM-generated outputs with a deeper understanding of the text's semantic content, leading to more reliable prompt validation.

Furthermore, the prompt evaluator 212, by modifying the two or more target prompts in the iterative manner may provide a dynamic and adaptive approach to prompt modification, thereby enabling the back-end system 106 to overcome LLM limitations and achieve optimal performance across a wide range of tasks and models.

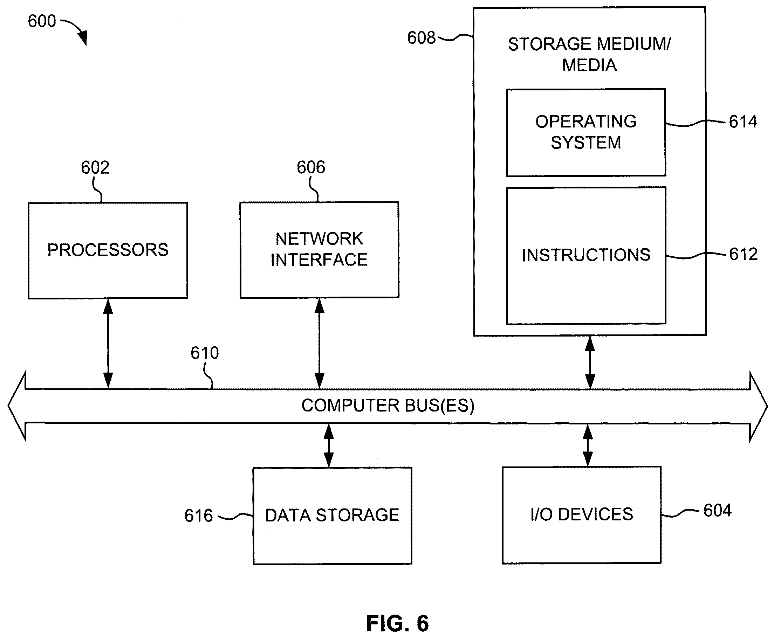

FIG. 6 illustrates a computer system 600 that may be used to implement the back-end system 106 disclosed in the example environment of FIG. 1. for dynamic prompt generation and adaptation across LLMs, in accordance with implementations of the present disclosure. More particularly, computing machines such as desktops, laptops, smartphones, tablets, and wearables which may be used to implement the tasks that may have the structure of the computer system 600. The computer system 600 may include additional components not shown and that some of the process components described may be removed and/or modified. In another example, a computer system 600 may be deployed on external-cloud platforms such as cloud, internal corporate cloud computing clusters, organizational computing resources, and/or the like.

The computer system 600 includes processor(s) 602, such as a central processing unit, ASIC or another type of processing circuit, input/output devices 604, such as a display, mouse keyboard, etc., a network interface 606, such as a Local Area Network (LAN), a wireless 802.11x LAN, a 3G or 4G mobile WAN or a WiMax WAN, and a computer-readable medium 608. Each of these components may be operatively coupled to a bus 610. The computer-readable medium 608 may be any suitable medium that participates in providing instructions to the processor(s) 602 for execution. For example, the computer-readable medium 608 may be non-transitory or non-volatile medium, such as a magnetic disk or solid-state non-volatile memory or volatile medium such as RAM. The instructions or modules stored on the computer-readable medium 608 may include machine-readable instructions 612 executed by the processor(s) 602 that cause the processor(s) 602 to perform the methods and functions of the system for dynamic prompt generation and adaptation across LLMs.

The system may be implemented as software stored on a non-transitory processor-readable medium and executed by the processors 602. For example, the computer-readable medium 608 may store an operating system 614, such as MAC OS, MS WINDOWS, UNIX, or LINUX, and code for the system. The operating system 614 may be multi-user, multiprocessing, multitasking, multithreading, real-time, and the like. For example, during runtime, the operating system 614 is running and the code for the system is executed by the processor(s) 602.

The computer system 600 may include a data storage 616, which may include non-volatile data storage. The data storage 616 stores any data used or generated by the system.

The network interface 606 connects the computer system 600 to internal systems for example, via a LAN. Also, the network interface 606 may connect the computer system 600 to the Internet. For example, the computer system 600 may connect to web browsers and other external applications and systems via the network interface 606.

What has been described and illustrated herein is an example along with some of its variations. The terms, descriptions, and figures used herein are set forth by way of illustration only and are not meant as limitations. Many variations are possible within the spirit and scope of the subject matter, which is intended to be defined by the following claims and their equivalents.

Implementations and all of the functional operations described in this specification may be realized in digital electronic circuitry, or in computer software, firmware, or hardware, including the structures disclosed in this specification and their structural equivalents, or in combinations of one or more of them. Implementations may be realized as one or more computer program products (i.e., one or more modules of computer program instructions encoded on a computer readable medium for execution by, or to control the operation of, data processing apparatus). The computer readable medium may be a machine-readable storage device, a machine-readable storage substrate, a memory device, a composition of matter effecting a machine-readable propagated signal, or a combination of one or more of them. The term computing system encompasses all apparatus, devices, and machines for processing data, including by way of example a programmable processor, a computer, or multiple processors or computers. The apparatus may include, in addition to hardware, code that creates an execution environment for the computer program in question (e.g., code that constitutes processor firmware, a protocol stack, a database management system, an operating system, or any appropriate combination of one or more thereof). A propagated signal is an artificially generated signal (e.g., a machine-generated electrical, optical, or electromagnetic signal) that is generated to encode information for transmission to suitable receiver apparatus.

A computer program (also known as a program, software, software application, script, or code) may be written in any appropriate form of programming language, including compiled or interpreted languages, and it may be deployed in any appropriate form, including as a stand-alone program or as a module, component, subroutine, or other unit suitable for use in a computing environment. A computer program does not necessarily correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may be deployed to be executed on one computer or on multiple computers that are located at one site or distributed across multiple sites and interconnected by a communication network.

The processes and logic flows described in this specification may be performed by one or more programmable processors executing one or more computer programs to perform functions by operating on input data and generating output. The processes and logic flows may also be performed by, and apparatus may also be implemented as, special purpose logic circuitry (e.g., an FPGA (field programmable gate array) or an ASIC (application specific integrated circuit)).

Processors suitable for the execution of a computer program include, by way of example, both general and special purpose microprocessors, and any one or more processors of any appropriate kind of digital computer. Generally, a processor will receive instructions and data from a read only memory or a random-access memory or both. Elements of a computer can include a processor for performing instructions and one or more memory devices for storing instructions and data. Generally, a computer will also include or be operatively coupled to receive data from or transfer data to, or both, one or more mass storage devices for storing data (e.g., magnetic, magneto optical disks, or optical disks). However, a computer need not have such devices. Moreover, a computer may be embedded in another device (e.g., a mobile telephone, a personal digital assistant (PDA), a mobile audio player, a Global Positioning System (GPS) receiver). Computer readable media suitable for storing computer program instructions and data include all forms of non-volatile memory, media and memory devices, including by way of example semiconductor memory devices (e.g., EPROM, EEPROM, and flash memory devices); magnetic disks (e.g., internal hard disks or removable disks); magneto optical disks; and CD ROM and DVD-ROM disks. The processor and the memory may be supplemented by, or incorporated in, special purpose logic circuitry.

To provide for interaction with a user, implementations may be realized on a computer having a display device (e.g., a CRT (cathode ray tube), LCD (liquid crystal display) monitor) for displaying information to the user and a keyboard and a pointing device (e.g., a mouse, a trackball, a touchpad), by which the user may provide input to the computer. Other kinds of devices may be used to provide for interaction with a user as well; for example, feedback provided to the user may be any appropriate form of sensory feedback (e.g., visual feedback, auditory feedback, tactile feedback); and input from the user may be received in any appropriate form, including acoustic, speech, or tactile input.

Implementations may be realized in a computing system that includes a back end component (e.g., as a data server), a middleware component (e.g., an application server), and/or a front end component (e.g., a client computer having a graphical user interface or a Web browser, through which a user may interact with an implementation), or any appropriate combination of one or more such back end, middleware, or front end components. The components of the system may be interconnected by any appropriate form or medium of digital data communication (e.g., a communication network). Examples of communication networks include a local area network (LAN) and a wide area network (WAN), e.g., the Internet.

The computing system may include clients and servers. A client and server are generally remote from each other and typically interact through a communication network. The relationship of client and server arises by virtue of computer programs running on the respective computers and having a client-server relationship to each other.

While this specification contains many specifics, these should not be construed as limitations on the scope of the disclosure or of what may be claimed, but rather as descriptions of features specific to particular implementations. Certain features that are described in this specification in the context of separate implementations may also be implemented in combination in a single implementation. Conversely, various features that are described in the context of a single implementation may also be implemented in multiple implementations separately or in any suitable sub-combination. Moreover, although features may be described above as acting in certain combinations and even initially claimed as such, one or more features from a claimed combination may in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems may generally be integrated together in a single software product or packaged into multiple software products.

A number of implementations have been described. Nevertheless, it will be understood that various modifications may be made without departing from the spirit and scope of the disclosure. For example, various forms of the flows shown above may be used, with steps re-ordered, added, or removed. Accordingly, other implementations are within the scope of the following claims.

## Claims

1. A computer-implemented method comprising:
receiving, at one or more processors of one or more computing devices, via a graphical user interface (GUI), user input, wherein the user input comprises an initial prompt, a target large language model (LLM), and an expected output of the target LLM;
dynamically selecting, by the one or more processors of the one or more computing devices, based upon the target LLM, an LLM from a plurality of LLMs and configuration parameters associated with the LLM;
generating, by the one or more processors of the one or more computing devices, based upon the selected LLM and the configuration parameters associated with the selected LLM, two or more target prompts;
selecting, by the one or more processors of the one or more computing devices, based upon evaluating the two or more target prompts, an output target prompt from the two or more target prompts; and
causing display, by the one or more processors of the one or more computing devices, of the output target prompt on the GUI.

2. The computer-implemented method of claim 1, wherein selecting the LLM and the configuration parameters comprises:
identifying and fetching, by the one or more processors of the one or more computing devices, based upon a model family associated with the target LLM, one or more rules for selecting the LLM; and
selecting, by the one or more processors of the one or more computing devices, the LLM based upon the identified and fetched one or more rules.

3. The computer-implemented method of claim 2, wherein the selected LLM standardizes a prompt by converting the initial prompt to a target prompt.

4. The computer-implemented method of claim 1, wherein the two or more target prompts are generated based upon a plurality of prompts stored in a database for selection.

5. The computer-implemented method of claim 1, wherein generating the two or more target prompts comprises:
selecting, by the one or more processors of the one or more computing devices, a meta prompt; and
generating, by the one or more processors of the one or more computing devices, based upon the meta prompt, the two or more target prompts, wherein each target prompt of the two or more target prompts includes a unique variation based at least in part upon the meta prompt and based at least in part upon the initial prompt.

6. The computer-implemented method of claim 1, wherein evaluating the two or more target prompts comprises:
applying, by the one or more processors of the one or more computing devices, one or more LLM parameters tuned for generating each of the two or more target prompts; and
comparing, by the one or more processors of the one or more computing devices, each of the two or more target prompts with the expected output of the target LLM for selecting the output target prompt.

7. The computer-implemented method of claim 6, further comprising applying one or more retuned LLM parameters until each of the two or more target prompts matches with the expected output of the target LLM by a predetermined threshold value.

8. A system comprising:
at least one memory comprising machine executable instructions stored thereon; and
at least one processor communicatively coupled with the at least one memory, and configured to execute the machine executable instructions to perform operations comprising:
receiving, via a graphical user interface (GUI), user input, wherein the user input comprises an initial prompt, a target large language model (LLM), and an expected output of the target LLM;
dynamically selecting, based upon the target LLM, an LLM from a plurality of LLMs and configuration parameters associated with the LLM;
generating, based upon the selected LLM and the configuration parameters associated with the selected LLM, two or more target prompts;
selecting, based upon evaluating the two or more target prompts, an output target prompt from the two or more target prompts; and
causing display of the output target prompt on the GUI.

9. The system of claim 8, wherein selecting the LLM and the configuration parameters comprises:
identifying and fetching, based upon a model family associated with the target LLM, one or more rules for selecting the LLM; and
selecting, based upon the identified and fetched one or more rules, the LLM.

10. The system of claim 9, wherein the selected LLM standardizes a prompt by converting the initial prompt to a target prompt.

11. The system of claim 8, wherein the two or more target prompts are generated based upon a plurality of prompts stored in a database for selection.

12. The system of claim 8, wherein generating the two or more target prompts comprises:
selecting a meta prompt; and
generating, based upon the meta prompt, the two or more target prompts, wherein each target prompt of the two or more target prompts includes a unique variation based at least in part upon the meta prompt and based at least in part upon the initial prompt.

13. The system of claim 8, wherein evaluating the two or more target prompts comprises:
applying one or more LLM parameters tuned for generating each of the two or more target prompts; and
comparing each of the two or more target prompts with the expected output of the target LLM for selecting the output target prompt.

14. The system of claim 13, wherein the operations further comprise applying one or more retuned LLM parameters until each of the two or more target prompts matches with the expected output of the target LLM by a predetermined threshold value.

15. A non-transitory computer readable media (CRM) comprising machine executable instruction stored thereon, which, when executable by at least one processor of at least one computing device, cause the at least one computing device to perform operations comprising:
receiving, via a graphical user interface (GUI), user input, wherein the user input comprises an initial prompt, a target large language model (LLM), and an expected output of the target LLM;
dynamically selecting, based upon the target LLM, an LLM from a plurality of LLMs and configuration parameters associated with the LLM;
generating, based upon the selected LLM and the configuration parameters associated with the selected LLM, two or more target prompts;
selecting, based upon evaluating the two or more target prompts, an output target prompt from the two or more target prompts; and
causing display of the output target prompt on the GUI.

16. The non-transitory CRM of claim 15, wherein selecting the LLM and the configuration parameters comprises:
identifying and fetching, based upon a model family associated with the target LLM, one or more rules for selecting the LLM; and
selecting, based upon the identified and fetched one or more rules, the LLM,
wherein the selected LLM standardizes a prompt by converting the initial prompt to a target prompt.

17. The non-transitory CRM of claim 15, wherein the two or more target prompts are generated based upon a plurality of prompts stored in a database for selection.

18. The non-transitory CRM of claim 15, wherein generating the two or more target prompts comprises:
selecting a meta prompt; and
generating, based upon the meta prompt, the two or more target prompts,
wherein each target prompt of the two or more target prompts includes a unique variation based at least in part upon the meta prompt and based at least in part upon the initial prompt.

19. The non-transitory CRM of claim 15, wherein evaluating the two or more target prompts comprises:
applying one or more LLM parameters tuned for generating each of the two or more target prompts; and
comparing each of the two or more target prompts with the expected output of the target LLM for selecting the output target prompt.

20. The non-transitory CRM of claim 19, wherein the operations further comprise applying one or more retuned LLM parameters until each of the two or more target prompts matches with the expected output of the target LLM by a predetermined threshold value.
